Europäisches Patentamt

European Patent Office

Office européen des brevets

(11) Veröffentlichungsnummer: **0 293 325**
A2

## (12) EUROPÄISCHE PATENTANMELDUNG

(21) Anmeldenummer: 88730122.4

(22) Anmeldetag: 24.05.88

(51) Int. Cl.⁴: **H 02 B 1/04**

(30) Priorität: 22.05.87 DE 8707526

(43) Veröffentlichungstag der Anmeldung:
30.11.88 Patentblatt 88/48

(84) Benannte Vertragsstaaten:
AT CH DE ES FR GB GR IT LI SE

(71) Anmelder: Paul & Siedler GmbH & Co KG
Mahlower Strasse 24
D-1000 Berlin 44 (DE)

(72) Erfinder: Lachmann, Gerhard
Zeisspfad 26b
D-1000 Berlin 49 (DE)

(74) Vertreter: Christiansen, Henning, Dipl.-Ing.
CHRISTIANSEN Pacelliallee 43/45
D-1000 Berlin 33 (DE)

(54) Gerät mit einer Halterung in Form einer Aussparung zur Aufnahme eines elektrotechnischen Bauelements.

(57) Gerät mit einer Halterung in Form einer Aussparung in einem Trägerblech zur Aufnahme eines elektrotechnischen Bauelements mit einem eine Stirnfläche aufweisenden, insbesondere becherförmigen, Gehäuse, mit einer durch die Aussparung hindurchsteckbar ausgebildeten Befestigung, die nach einer Verschiebung parallel zur Oberfläche das Trägerblech im Bereich der Aussparung mit mehreren im wesentlichen parallel zur Stirnfläche gerichteten und im wesentlichen denselben Abstand zu dieser aufweisenden Anlageflächen hintergreift, wobei mindestens drei Befestigungselemente (7) vorgesehen sind, die jeweils aus der Stirnfläche herausragende Sockelelemente (11) aufweisen, welche in hakenförmig abgewinkelte Teile (12) übergehen, die einzelne der Stirnfläche zugewandte, sich im wesentlichen parallel zu dieser erstreckende Anlageflächen (13) aufweisen, die hakenförmige abgewinkelten Teile sich für alle Befestigungselemente vom Sockelelement aus in dieselbe Richtung erstrecken und die Befestigungselemente (7 bis 10) im Bereich des Randes, insbesondere der Ecken, der Stirnfläche (6) vorgesehen sind.

Fig. 1a

EP 0 293 325 A2

## Beschreibung

### Gerät mit einer Halterung in Form einer Aussparung zur Aufnahme eines elektrotechnischen Bauelements

Die Erfindung betrifft ein Gerät der im Oberbegriff des Anspruchs 1 angegebenen Art.

Derartige Geräte enthalten als elektromechanische und elektronische Baugruppen Bauelemente, welche insgesamt in das Gerät als grössere Einheit leicht einfügbar sein müssen, wobei im Servicefall gegebenenfalls das gesamte Bauelement schnell ausgetauscht werden soll.

Eine derartige Montagegruppe ist aus der DE-AS 16 40 622 bekannt. Nachteilig bei dieser Anordnung ist die Tatsache, daß die Halterung hauptsächlich in einem zentralen Bereich wirksam ist. Im Falle einer bei dem Trägerblech und dem Befestigungselement vorauszusetzenden gewissen Elastizität führen auf das Gehäuse des Bauelements wirkende Momente zu einem seitlichen Ausweichen desselben. Somit können bei im Betrieb auftretenden Beschleunigungen Massekräfte zu Vibrationen - und im Endeffekt zu einer Lockerung - des Bauelements führen.

Der im kennzeichnenden Teil des Anspruchs 1 angegebenen Erfindung liegt die Aufgabe zugrunde, bei einem Gerät mit der eingangs genannten Gattung bei Beibehaltung einer einfachen Montagehandhabung sicherzustellen, daß das Bauelement ohne weiteres eine definierte Endposition einnimmt und bei den im Betrieb auftretenden Massenkräften des Gerätes dort im wesentlichen unverrückbar gehalten ist. Darüber hinaus soll auch der geräteseitige Befestigungsaufwand gering gehalten sein.

Diese Aufgabe wird durch ein elektrotechnisches Gerät mit den im kennzeichnenden Teil des Anspruchs 1 genannten Merkmalen gelöst.

Die Erfindung beruht auf der Erkenntnis, daß durch die auf der Stirnfläche weit nach außen versetzten Befestigungse lemente die Reaktionskräfte - sowohl in Druck- als auch in Zugrichtung - mit einem großen Hebelarm wirken, so daß die ohne wesentliche Verformung übertragbaren Momente maximiert werden.

Besonders günstig ist dabei, daß die Montage einhändig und mit einer seitlichen Bewegung durchgeführt werden kann, so daß auch die Anwendung von Handhabungsautomaten in günstiger Weise möglich ist. Es ist kein zusätzlicher Platz, beispielsweise für das Ausführen einer Drehbewegung oder eine Werkzeugbetätigung, erforderlich. Bei vorteilhaften Weiterbildungen, wie sie in den Unteransprüchen angegeben sind, arretiert sich das Bauelement selbsttätig und kann auch ohne besonderen Kraftaufwand wieder gelöst werden. Die Arretierung des Bauelements hält es sicher an seinem Platz gegenüber beliebigen Kräften und Momenten unterhalb der Bruchgrenze.

Die entsprechende Aufnahme kann in einem Blechteil durch einfaches Stanzen erzeugt werden. Dadurch, daß die Befestigungsvorrichtung an der Stirnfläche des becherförmigen Gehäuses vorgesehen ist, sind die elektrischen Anschlüsse an der von der Befestigungsgrundfläche abgewandten Seite her bequem zugänglich, so daß auch die elektrischen Verbindungen nach Anbringung des Bauelementes durch Handhabungsautomaten hergestellt werden können. Ein Austausch des Bauelementes ist im Servicefall mit zwei Handgriffen möglich.

Durch einen bevorzugt vorgesehenen zentralen Noppen- oder Erhebungsbereich wird im Zusammenwirken mit den Befesti gungselementen eine Vorspannung erzeugt, welche die Baugruppe in dem Gerät arretiert.

Andere vorteilhafte Weiterbildungen ermöglichen eine selbsttätige Zentrierung des Bauelementes in der Endposition, so daß eine zusätzlich erleichterte Handhabung gegeben ist. Das Befestigungselement ist in günstiger Ausführung als einstückiges Kunststoffspritzteil mit dem becherförmigen Gehäuse verbunden.

Dadurch, daß die Befestigungselemente radial im Bereiche des Randes, insbesondere der Ecken, der Stirnfläche vorgesehen sind, sind die erzielbaren Haltekräfte besonders groß. Wenn die hakenförmig abgewinkelten Teile sich in von der Stirnfläche entfernender Richtung verjüngend ausgebildet sind, läßt sich das Bauelment nahezu "blind" in das Trägerteil des zugehörigen Geräts einführen, da das Zentrieren der Halteelemente in den Aussparungen selbsttätig erfolgt. Bevorzugt sind dabei die sich verjüngenden Bereiche derart ausgespart, daß lediglich Bereiche von Scheitellinien massiv ausgebildet sind, womit eine weitgehende Materialersparnis und eine massearme Konstruktion erreicht wird.

Das Bauelement läßt sich in einfacher Weise gegen ein unbeabsichtigtes Herausfallen sichern, wenn ein mit dem Bauelement verbundenes über die Ebene der Stirnfläche elastisch hinausragendes Sperrelement vorgesehen ist, welches in eine seinem Querschnitt in der Ebene der Stirnfläche angepaßte Ausnehmung oder Aussparung hineinragt, wobei das Sperrelement eine im wesentlichen senkrecht zur Ebene der Stirnfläche gerichtete Sperrfläche aufweist, die in die zur Richtung der hakenförmig abgewinkelten Elemente entgegengesetzte Richtung weist. Die Betätigung ist dadurch erleichtert, daß das Sperrelement auf einer sich in Verlängerung der Stirnfläche über diese hinausragende, elastisch biegsamen Zunge angeordnet ist, insbesondere, wenn mit der Zunge ein Betätigungshebel verbunden ist, der sich in einem Abstand parallel zur Wandung des Bauelements senkrecht zur Ebene der Stirnfläche entgegengesetzt zur Richtung der Halteelemente erstreckt.

Wenn die Befestigung gegenüber elektrischen Elementen in der Weise vorgesehen ist, daß die elektrischen Kontakt-und/oder Verbindungselemente an einem entgegengesetzt zur Stirnfläche gerichteten Oberflächenbereich des Bauelements angeordnet sind, können die elektrischen Anschlüsse sehr leicht von "oben" her erreicht werden. Die Reaktionskräfte der Kontakte und elektrischen Befestigungen können dabei von den mechanischen Befestigungen wegen deren erfindungsgemäßer Gestaltung ohne weiteres aufgenommen werden.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Figuren 1a bis c das elektrotechnische Bauelement als bevorzugtes Ausführungsbeispiel der Erfindung in zwei Seitenansichten und einer Draufsicht,

Figuren 2a, 3b, 3 und 4 Einzelheiten des Ausführungsbeispiels gemäß Figur 1a und

Figur 5 eine Detaildarstellung des Gerätes zur Aufnahme des elektrischen Bauelementes in Draufsicht.

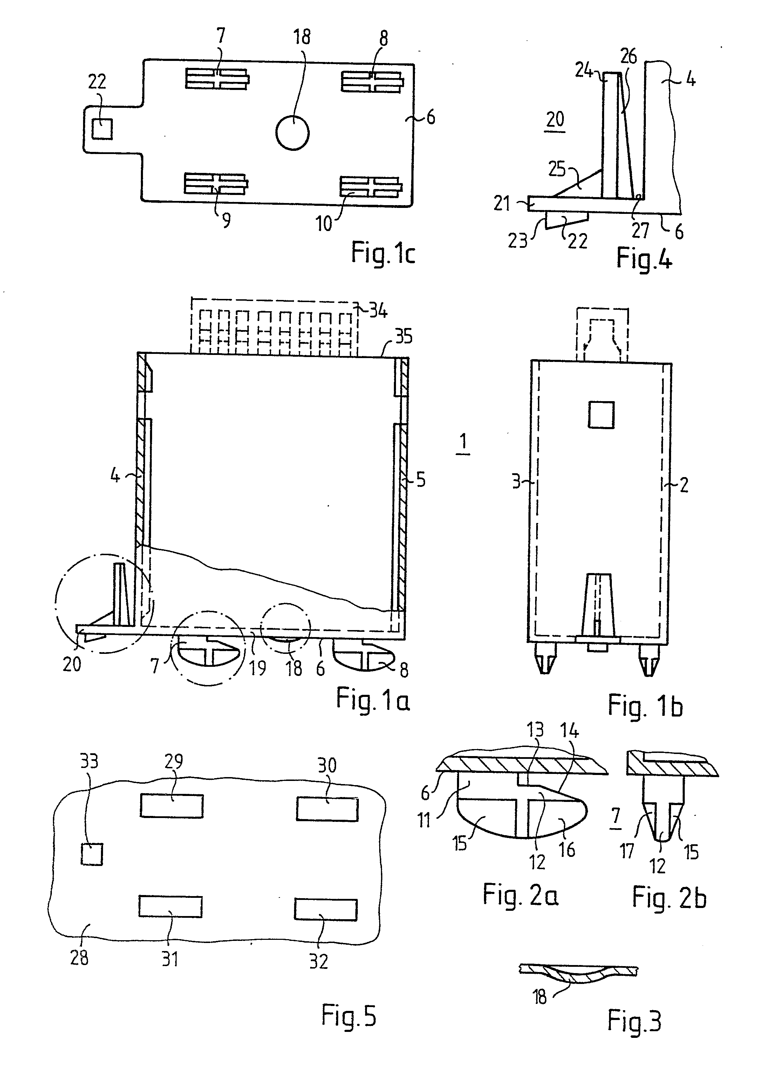

Bei dem in den Figuren 1a bis c dargestellten elektrotechnischen Bauelement 1 bilden Seitenwandungen 2 bis 5 ein becherförmiges Gehäuse zur Aufnahme beispielsweise eines Relais und eine Stirnfläche 6 weist Halteelemente 7 bis 10 auf, wie sie in den Figuren 2a und b am Beispiel des Halteelementes 7 vergrößert wiedergegeben sind.

Das einzelne Halteelement besteht aus einem hakenförmigen Teil, dessen an der Stirnfläche 6 befestigter Sockelteil 11 einen rechteckigen Querschnitt aufweist. Ein hakenförmiger Ansatz 12 erstreckt sich für alle Befestigungselemente in dieselbe Richtung. Dieser weist eine Fläche 13 auf, die parallel zur Stirnfläche 6 gerichtet ist und für alle Befestigungselemente denselben Abstand zur Stirnfläche 6 besitzt. Eine schräge (Auf-)Gleitfläche 14 schließt an die Fläche 13 an der dem Sockelelement gegenüberliegenden Seite an und entfernt sich in zunehmendem Abstand von dem Sockelelement mit einer Steigung von ungefähr 20° von der Stirnfläche 6. Auf diese Weise wird das elektrische Bauelement beim Schieben in seine Endposition bei dem Befestigen an dem Gerät zunehmend an die Befestigungsfläche herangezogen und sitzt in der Endposition klapperfrei.

Der der Fläche 13 gegenüberliegende nach außen gerichtete Bereich des hakenförmigen Ansatzes ist verrundet (und damit sich in zunehmender Entfernung von der Stirnfläche 13 verjüngend) ausgeführt, so daß beim Einsetzen zum Befestigen die Positon des Bauelementes 1 nur ungefähr gefunden zu werden braucht und eine selbständige Zentrierung bezüglich der Ausnehmungen, in die die Halteelemente 7 bis 10 eingreifen, erfolgt (Figur 2a).

Aus Figur 2b (einer weiteren Seitenansicht des Halteelementes 7) ist ersichtlich, daß der hakenförmige Ansatz 12 sich allseitig verjüngt (bezogen auf eine senkrecht zur Stirnfläche 6 stehende Richtung). Zur Materialersparnis sind dabei Ausnehmungen 15, 16 und 17 vorgesehen, die derart ausgebildet sind, daß der hakenförmige Ansatz in der Draufsicht (Figur lc) eine kreuzförmige Struktur im Bereich aufweist. Die kreuzförmige Struktur bildet dabei in den Scheitelbereichen Gleitflächen, welche als insgesamt Teile einer Kuppel bildende Kontur ein zwangloses Einsetzen der hakenförmigen Elemente in die entsprechenden Ausnehmungen ermöglichen.

In Figur 3 ist eine Noppe 18 als Einzelheit von Figur 1a wiedergegeben, welche in einem zentralen Bereich zwischen den Halteelementen 7 bis 10 angeordnet ist. Der die Stirnfläche 6 aufweisende Boden 19 des becherförmigen Gehäuses des elektrotechnischen Bauelementes 1 ist geringfügig elastisch ausgebildet, wobei diese Elastizität bereits aus der Formgebung resultiert, welche auf einer Ausführung des becherförmigen Gehäuses mit hakenförmigen Ansätzen als einstückiges Kunststoffteil basiert. Die Noppe 18 liegt an der Oberfläche des Gerätes an, in das das Bauelement eingesetzt wird, wobei dadurch nicht nur ein klapperfreier Sitz gewährleistet ist, sondern auch Toleranzen der Materialstärke im Bereich von bis zu 40% ausgeglichen werden.

Von besonderer Bedeutung ist dabei sie Tatsache, daß die Halteelemente in radial entfernten Bereichen von der Noppe 18 nahe den Außenkanten zur Stirnfläche 6 angeordnet sind, so daß Zug- und Druckkräfte im Bereich der Außenecken in das Trägerelement übergeleitet werden. Auf diese Weise ist das elektrische Bauelement auch bei auf sein becherförmiges Gehäuse in seitlicher Richtung wirkenden Kräften sicher befestigt und kann auch bei geringfügiger Verformung der Bodenfläche 19 bzw. des entsprechenden Befestigungsbleches nicht aus seiner Halteposition ausweichen.

Zusätzlich ist im Bereich der Seitenwandung 4 noch ein in Figur 4 separat vergrößertes Arretierungselement 20 vorgesehen, welches in Form einer Zunge 21 als Kunststoffspritzteil ebenfalls einstückig an das becherförmige Gehäuse angeformt ist. Die Zunge 21 trägt eine in Richtung der Halteelemente 7 bis 10 weisende Erhebung 22, welche eine senkrecht zur Stirnfläche 6 gerichtete, eine seitliche Verschiebung sperrende Fläche 23 besitzt. Senkrecht zur Zunge 21, und zwar parallel zur Seitenwandung 4 gerichtet, ist ein Betätigungshebel 24 vorgesehen, welcher durch Versteifungsflächen 25 und 26 mit der Zunge 21 starr verbunden ist, wobei zwischen dem Betätigungshebel 24 und der Seitenwandung 4 ein nichtversteifter Bereich 27 der Zunge 21 verbleibt, welcher bei Druck auf den Hebel 24 in Richtung auf die Seitenwandung 4 eine Bewegung der Zunge in der Art ermöglicht, daß der Ansatz 22 in entgegengesetzter Richtung in der die Halteelemente aus der Stirnfläche 6 herausragen, angehoben wird.

Da das Gehäuse des Bauelements für die dargestellte Befestigung keinerlei Durchbrüche benötigt, ist eine spritz wassergeschützte Ausführung ohne besondere Schwierigkeiten herstellbar.

In Figur 5 ist derjenige Teil eines Gerätes 28 dargestellt, in den das elektrische Bauelement 1 eingefügt werden soll. Es handelt sich dabei um ein Blechteil mit Ausnehmungen 29 bis 32, welche korrespondierend zu den Halteelementen 7 bis 10 (vgl. Draufsicht in Figur 1c) angeordnet sind, so daß diese durch das Blechteil hindurchgesteckt werden können. In einem zentralen Bereich zwischen den Ausnehmungen 29 und 32 ist die entsprechende Fläche des Gerätes 28 aber massiv, so daß sich dort die Noppe 18 abstützen kann. Der Befestigungsbereich des Gerätes 28 für das Gerät 1 kann ebenfalls geringfügig flexibel ausgebildet sein - entsprechend etwa der Flexibilität von Stahlblech von 0,6 bis 1,1 mm Stärke. Eine zusätzliche Ausnehmung 33 dient zur Aufnahme der Erhebung 22 und entspricht in seiner flächenmäßigen Erstreckung der Größe der Erhebung 22 in der Draufsicht auf die Stirnfläche 6. Es ist ersichtlich, daß das Bauelement 1 sich ohne besondere Aufmerksamkeit, d.h. auch durch automatische Handhabungsgeräte, in die Position zum Einrasten in die Ausnehmungen des Gerätes 28 gemäß Figur 5 bringen läßt. Dabei ist lediglich eine Verschiebung nach (in der Zeichnung) rechts erforderlich, bis die Erhebung 22 in die Ausnehmung 33 einschnappt.

Damit ist das Bauelement 1 sicher befestigt und kann insbesondere die im Betrieb bei Erschütterungen auftretenden Massenkräfte und auch solche Kräfte, die durch Befestigung von Kabeln an Kontaktelementen 34 (in Figuren 1a und 1b gestrichelt dargestellt) aufnehmen, wobei diese Kontaktelemente 34 an einer der Stirnfläche 6 gegenüberliegenden Fläche 35 vorgesehen sind, welche auch bei befestigtem Bauelement 1 bequem zugänglich ist. Auf diese Kontaktelemente 34 aufgebrachte Kräfte erzeugen in Bezug auf die Befestigung des Elementes 1 das größte Moment. Dieses kann aber durch die erfindungsgemäßen Maßnahmen ohne Gefährdung der Haltewirkung und ohne wesentliches Ausweichen des Bauelementes 1 aus seiner befestigten Position aufgenommen werden. Das gilt auch für die Kräfte, welche beim Herstellen und beim Lösen der elektrischen Verbindungen auftreten. Trotzdem läßt sich das Bauelement 1 durch Anheben der Verriegelungszunge mit kleinen Kräften ohne weiteres aus der Befestigugspositon lösen, so daß die Wartungsfreundlichkeit des betreffenden Gerätes gewährleistet ist.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch machen.

**Patentansprüche**

1. Gerät mit einer Halterung in Form einer Aussparung in einem Trägerblech zur Aufnahme eines elektrotechnischen Bauelements mit einem eine Stirnfläche aufweisenden, insbesondere becherförmigen, Gehäuse, mit einer durch die Aussparung hindurchsteckbar ausgebildeten Befestigung, die nach einer Verschiebung parallel zur Oberfläche das Trägerblech im Bereich der Aussparung mit mehreren im wesentlichen parallel zur Stirnfläche gerichteten und im wesentlichen denselben Abstand zu dieser aufweisenden Anlageflächen hintergreift, **dadurch gekennzeichnet,** daß mindestens drei Befestigungselemente (7 bis 10) vorgesehen sind, die jeweils aus der Stirnfläche herausragende Sockelelemente (11) aufweisen, welche in hakenförmig abgewinkelte Teile (12) übergehen, die einzelne der Stirnfläche zugewandte, sich im wesentlichen parallel zu dieser erstreckende Anlageflächen (13) aufweisen, wobei die hakenförmig abgewinkelten Teile sich für alle Befestigungselemente vom Sockelelement aus in dieselbe Richtung erstrecken und daß die Befestigungselemente (7 bis 10) im Bereich des Randes, insbesondere der Ecken, der Stirnfläche (6) vorgesehen sind.

2. Gerät nach Anspruch 1, bei dem im Bereich der Stirnfläche eine, insbesondere noppenförmige, Erhebung vorgesehen ist, welche mindestens in der Befestigungsposition an dem Trägerblech unter Vorspannung anliegt, **dadurch gekennzeichnet,** daß die Erhebung (18) im zentralen Bereich der Stirnfläche vorgesehen ist.

3. Gerät nach einem der vorangehenden Ansprüche, **dadurch gekennzeichnet,** daß die Befestigungselemente (7 bis 10) aus Kunststoff bestehen und einstückig an die Stirnfläche angespritzt sind.

4. Gerät nach einem der vorangehenden Ansprüche, **dadurch gekennzeichnet,** daß die Sockelelemente der Befestigungselemente (7 bis 10) senkrecht zur Stirnfläche gerichtet sind.

5. Gerät nach einem der vorangehenden Ansprüche, **dadurch gekennzeichnet,** daß die hakenförmig abgewinkelten Teile (12) sich in von der Stirnfläche (8) entfernender Richtung verjüngend ausgebildet sind.

6. Gerät nach Anspruch 5, **dadurch gekennzeichnet,** daß die sich verjüngenden Bereiche derart ausgespart (15 bis 17) sind, daß lediglich Bereiche von Scheitellinien massiv ausgebildet sind.

7. Gerät nach einem der vorangehenden Ansprüche, **dadurch gekennzeichnet,** daß die Öffnungen (29 bis 32) zur Aufnahme der hakenförmigen Befestigungselemente (7 bis 10) den größten Abmessungen dieser Elemente in der Draufsicht in Richtung Stirnfläche des Bauelements (1) angepaßt sind.

8. Gerät nach einem der vorangehenden Ansprüche, **dadurch gekennzeichnet,** daß an die Anlagefläche (13) in Richtung der hakenförmig abgewinkelten Bereiche eine Aufgleitfläche (14) anschließt, die sich mit zunehmender Entfernung von der Anlagefläche auch von der Stirnfläche entfernt.

9. Gerät nach einem der vorangehenden Ansprüche, **dadurch gekennzeichnet,** daß ein mit dem Bauelement (1) verbundenes über die Ebene der Stirnfläche (6) elastisch hinausragendes Sperrelement (22) vorgesehen ist, welches in eine seinem Querschnitt in der Ebene der Stirnfläche angepaßte Ausnehmung oder Aussparung (33) hineinragt, wobei das Sperrelement eine im wesentlichen senkrecht zur Ebene der Stirnfläche gerichtete Sperrfläche (23) aufweist, die in die zur Richtung der hakenförmig abgewinkelten Elemente (12) entgegengesetzte Richtung weist.

10. Gerät nach Anspruch 9, **dadurch gekennzeichnet,** daß das Sperrelement (22) auf einer sich in Verlängerung der Stirnfläche (6) über diese hinausragende, elastisch biegsamen Zunge (21) angeordnet ist.

11. Gerät nach einem der vorangehenden Ansprüche, **dadurch gekennzeichnet,** daß mit der Zunge (21) ein Betätigungshebel (24) starr verbunden ist, der sich in einem Abstand parallel zu einer benachbarten Wandung (4) des Bauelements (1) senkrecht zur Ebene der Stirnfläche (6) entgegengesetzt zur Richtung in der die Halteelemente aus der Stirnfläche herausragen, erstreckt.

12. Gerät nach einem der vorangehenden Ansprüche, **dadurch gekennzeichnet,** daß elektrische Kontakt- und/oder Verbindungselemente (34) an einem entgegengesetzt zur Stirnfläche (6) gerichteten Oberflächenbereich (35) des Bauelements (1) angeordnet sind.

13. Gerät nach einem der vorangehenden Ansprüche, **dadurch gekennzeichnet,** daß das Gehäuse des Bauelements (2 bis 6, 35) eine im wesentlichen geschlossene spritzwassergeschützte Oberfläche aufweist.

0293325

Fig.1c

Fig.4

Fig. 1a

Fig. 1b

Fig.5

Fig. 2a

Fig. 2b

Fig.3